(19) **Europäisches Patentamt**

**European Patent Office**

**Office européen des brevets**

(11) **EP 1 061 363 A2**

(12) **EUROPEAN PATENT APPLICATION**

(43) Date of publication:
20.12.2000 Bulletin 2000/51

(51) Int. Cl.[7]: **G01N 29/26**

(21) Application number: **00111098.0**

(22) Date of filing: **05.06.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **04.06.1999 US 325929**

(71) Applicant:
**Siemens Power Corporation**
**Richland, WA 99352 (US)**

(72) Inventor:
**McClelland, Richard, G.**
**Richland, WA 99352 (US)**

(74) Representative:
**Kahlhöfer, Hermann, Dipl.-Phys. et al**
**Patent- und Rechtsanwälte,**
**Bardehle,Pagenberg,Dost,Altenburg,Geissler,Is enbruck**
**Uerdinger Str. 5**
**40474 Düsseldorf (DE)**

(54) **Apparatus for reactor vessel piping weld inspection using ultrasonic guided waves**

(57) An apparatus for ultrasonic reactor vessel piping weld inspection using non-axisymmetric guided waves.

## FIG. 1

**EP 1 061 363 A2**

## Description

### Field Of The Invention

The present invention relates generally to a system for ultrasonic inspection of the internal and external nuclear reactor component piping, such as reactor vessel piping welds, nozzle safe end welds, jet pump riser welds, core spray piping welds.

### Background Of The Invention

Reactor vessels have numerous internal and external piping welds requiring periodic inspection that are not physically accessible to normal ultrasonic weld inspection techniques. Some of these include nozzle safe end welds, jet pump risers, core spray piping welds, etc. Because of their location, such as in the vessel and between the vessel and the bioshield, it is impractical to perform ultrasonic testing or to place an ultrasonic transducer near the weld for conventional inspection. Where these welds can be inspected, the equipment is expensive and the process complex and time consuming.

There therefore exists a need for an inspection method which overcomes the above-stated disadvantages and which enables the rapid and efficient inspection of nuclear reactor piping welds.

### Summary of the Invention

The present invention relates to a system for ultrasonically inspecting physically inaccessible vessel piping using non-axisymmetric guided waves.

### Brief Description of the Drawings

Figure 1 depicts the excitation of guided waves using an oblique incidence, longitudinal wave transducer on a plexiglass wedge;

Figure 2A is a graphical representation of the phase velocity excitation zone when guided waves are induced by oblique incidence, longitudinal wave excitation;

Figure 2B is a graphical representation of the phase velocity excitation zone when guided waves are induced by a periodic distribution of normal excitations with the spatial period equaling the wavelength of the excited mode, the ["comb" method];

Figure 3 depicts the comb type excitation and the relationship between spatial period and wavelength;

Figure 4 shows a block diagram of a first embodiment of the present invention; Figure 5 shows a block diagram of another embodiment of the present invention.

### Detailed Description

In accordance with the present invention, the use of partially loaded transducers to produce non-axisymmetric guided waves, either singularly or multiple using swept frequency tone burst modulation and/or phasing are used to permit the rapid inspection of inaccessible welds of reactor vessel piping.

In accordance with an aspect of the present invention, a method is provided for ultrasonic inspection of a nuclear reactor piping welds, comprising the steps of transmitting ultrasonic guided waves into the piping and detecting a reflected ultrasonic wave from the piping which is indicative of a weld defect or a variation from a predetermined wall thickness.

A guided wave is an ultrasonic wave induced in a tubular walled object with such properties that permit the wave to stay within the boundaries of the material with little or no leakage to either surface. Guided waves can be induced in plate as well as in piping. The production of guided waves in an object is controlled by the proper selection of transducer frequency, transducer incidence angle, test object material velocity, and material wall thickness. Since the wave is attenuated only by the material impedance, the waves can travel long distances with little attenuation.

There are several ways of inducing guided waves in an object. The two most used are oblique incidence angle transducer and specially designed transducers such as a "comb" transducer. In the first, a standard transducer is positioned at a predetermined angle to the test object and a wave injected. Since the transducer element is not in contact with the test object due to the incidence angle, a conducting medium such as plastic or water must be added to transfer the sound from the transducer element to the test object.

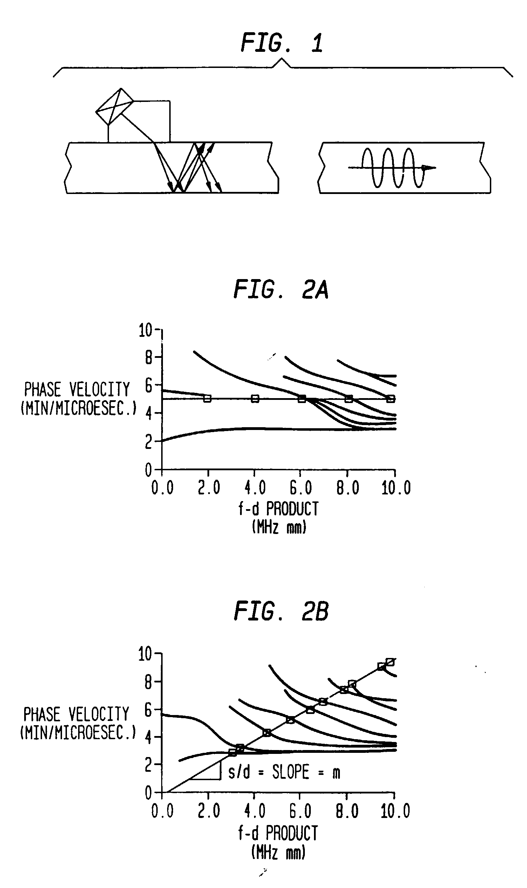

Referring to Figure 1, depicting the generation of a guided wave at an oblique incidence in tubing using a longitudinal wave transducer on an acoustic coupling material such as plastic. The longitudinal wave is incident at some incident angle $\Theta$, and velocity $V_{plexi}$. Due to Snell's law, the waves undergo mode conversion, reflection and refraction at the interfaces. At some distance away from the transducer, the waves will no longer be individually identifiable, but will superimpose into a wave packet.

For certain cases of incident angle, thickness, and material properties, constructive interference will take place, and a guided wave will propagate in the pipe. These conditions for constructive interference are met for many combinations of thickness, angle, and material properties. The combinations which result in constructive interference are termed modes. Each mode has its own characteristics of wave structure, propagation velocity, and stress distribution. In particular, each mode has an in plane and out of plane displacement at the wave guide surface. The amount of out of plane displacement dictates how "leaky" the mode will be since the out of plane displacement causes the generation of longitudinal waves out of the material and which carry energy out of the wave guide.

The theoretical modeling of guided wave propagation results in dispersion curves and wave structure diagrams that describe the wave propagation. A phase velocity dispersion curve is typically used for generation criterion for guided waves. In the case of oblique incidence generation, the phase velocity is simply related to angle of incidence by Snell's law:

$$\frac{Sin\theta_i}{V_{Plexi}} = \frac{Sin90}{V_{Phase}}.$$

A group velocity dispersion curve provides the propagation velocity of the generated guided waves modes.

As stated above, inducing guided waves by oblique incidence, longitudinal wave excitation is accomplished by coupling a longitudinal wave transducer to an object to be tested at an incident angle through the use of a plastic wedge. A specific phase velocity is generated which is governed by Snell's Law for the plastic wedge. Therefore, modes can be generated which intercept the particular phase velocity excitation zone. Figure 2A shows the excitation zone for this method.

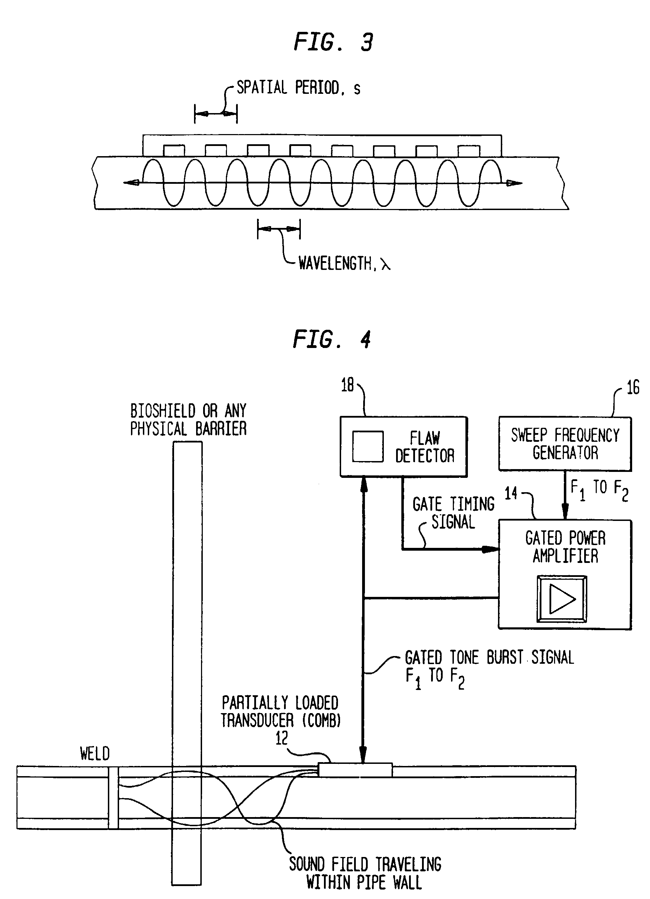

A second way of inducing guided waves in an object is the "comb" method. A comb transducer is a contact type transducer for producing guided waves and whose characteristics are determined by the spacing and thickness of the comb elements. In this method, excitation is accomplished by a periodic distribution of normal excitations with the spatial period equaling the wavelength of the excited mode (Figure 3). Instead of a horizontal excitation region as in the oblique incidence method (Fig. 2A), the excitation is in the form of a straight line passing through the origin (Fig. 2B). The equation of the line is of the form y=mx, where y=V$_{phase}$, x=fd, and m=s/d and where

$$V_{phase} = f\lambda = fs = \frac{s}{d}fd,$$

and s is the comb spacing. Figure 2B is a graphical representation of the phase velocity excitation zone for this method.

Although either method of generation can be used for flaw detection, comb transducers can be manufactured with varying degrees of spacing element thickness and contour to generate the desired mode in a variety of material diameters, thicknesses and properties.

The comb transducer is designed to produce guided waves in the piping that have a longitudinal phase velocity that is "non-leaky" to both the piping inner surface and outer surface, i.e. the guided wave remains within the piping wall. This provides for maximum sensitivity and minimum attenuation. The transducer operating frequency is selected to produce circumferential sound field intensities that are maximum at desired inspection points. Transducer parameters (operating frequency, width, distance between the "teeth" of the comb transducer, etc.) can be modified to cause the sound field to be at virtually any desired inspection point (i.e. axial position and circumferential position along the pipe).

In piping, both axisymmetric and non-axisymmetric guided waves can propagate. Axisymmetric guided waves refer to modes where the particle motion is only in longitudinal and radial directions and have uniform distributions of stress and particle motion around the tube. Although most impracticable, this can be accomplished by using a fully encircling comb transducer. Non-axisymmetric guided waves have torsional components as well as longitudinal and radial components to the particle motion and have non-uniform distribution of stress and particular motion around the tube.

There are two inspection modes utilizing comb type transducers, "loaded" and "partially loaded". In a loaded application, the transducer fully surrounds the outer surface of the piping. This is the optimum test in that the transducer generates a uniform (axisymmetric) sound field that travels in both directions (i.e. axially and circumferentially) in the piping and gives the maximum sensitivity. In a partially loaded test, only a segment of the transducer contacts the test object. This is less than optimum in that it produces a non-axisymmetric sound field circumferentially and axially along the pipe. This non-axisymmetric sound field has limited inspection value due to the nonuniformity of the sound field at any specific location. Because of the very limited access to the reactor vessel piping, only partial loading sources can be used such as a section of a comb transducer which will product non-axisymmetric waves. This is not a problem because the transducer physical characteristics (e.g. number of comb teeth, loading area etc.) and fundamental frequency parameters can be optimized to generate the maximum sound field at the desired location. Changes to the location and intensity of the sound field are most sensitive to frequency changes.

Sound field characteristics are heavily dependent on frequency, when the properties of the test object are constant such as in nuclear reactor piping. To further increase the effectiveness of the inspection technique, the tone burst excitation would be "swept" through a specific frequency band causing the sound field to change in intensity circumferentially around the piping being inspected. The use of a swept frequency tone burst generator as a transducer excitation source permits the entire weld region of the piping to be inspected from one location without the need for generating axisymmetric waves from a fully encircling comb transducer. Use of such a fully encircling comb transducer would require the disassembly of the piping in order to place the piping through the encircling comb transducer. Defects within the piping would reflect part of the guided wave signal which would be received by the comb transducer operating in the pulse-echo mode. The amplitude of the reflected signal is proportional to the facial area of the defect. Thus, the use of swept frequency would permit the sound field to inspect a full 360° of the piping by the sound field changing in accordance with the sweep frequency.

In another preferred embodiment of the present invention, the comb transducer is positioned on the piping surface, and the transducer would be pulsed at a repetition rate. When the transducer achieved a position normal to the piping, maximum loading will be achieved on the piping, the injected signal would travel within the piping walls, producing sound field intensities at the desired inspection point(s) as determined by the transducer physical characteristics. Because the guided wave produced in the reactor vessel piping is non-leaky, it is most sensitive to thinning, defects or other changes in only the piping wall. Portions of the sound wave are reflected for example by any change in the wall-to-wall thickness such as would be produced by corrosion. The reflected signal is received by the transmitting transducer and transmitted to and processed by the ultrasonic instrument.

The guided wave ultrasonic transducer can use either tone burst or shock excitation.

Thus, in summary, the properties of guided waves make them ideal for inspection of remote welds, namely they exhibit little attenuation over long distances and they are bounded by the part surfaces. The use of axisymmetric guided waves, those produced by a transducer that fully surrounds the pipe outer diameter or inner diameter, is impractical if not impossible due to the physical constraints of the vessel and environment. Non-axisymmetric guided waves are produced by partially loaded ultrasonic transducers, transducers that do not fully surround the pipe outer diameter or totally fill the inner diameter, and exhibit different properties than axisymmetric guided waves. The sound field geometry produced by non-axisymmetric transducers can be manipulated by controlling frequency and the geometry of the transducer element. Additionally, the sound field can be further manipulated by phasing the operation of 2 or more partially loaded transducers by a combination of frequency and firing sequence and time delays.

Controlled changing of the phase velocity (frequency) of a bounded guided wave will change the sound field geometry in a bounded system within certain limitations. Due to constructive and destructive interference, the sound field can be made to move axially and circumferentially along the part.

In accordance with one embodiment of the present invention, a weld inspection system would consist of a transducer 12 formed to the contour of the pipe under inspection, a gated tone burst power amplifier 14, a sweep frequency generator 16, and a ultrasonic flaw detector 18 (Figure 4). Transducer 12 could be either conventional or "comb" type. For a conventional transducer, a "wedge" would be required to provide the correct incident angle to generate guided waves in the material. Operationally, the limits of the sweep frequencies would be selected to maintain the sound field in the material to the maximum extent possible. If the pipe were submerged or filled with liquid, the frequency limits are more constrained than if the pipe were in air, due to the acoustic impedance differences which would cause leakage.

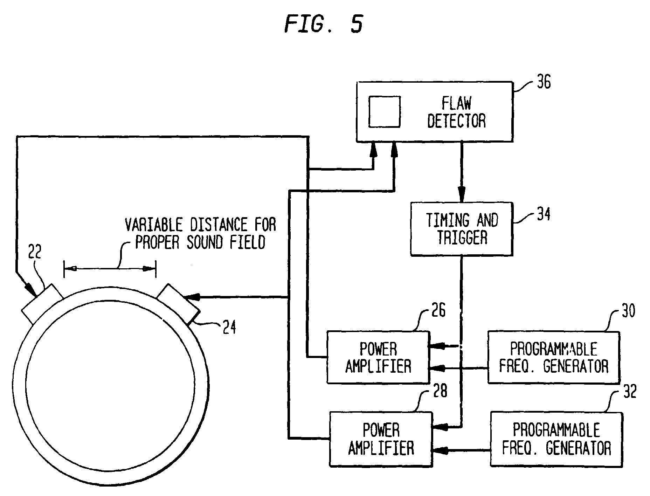

In another embodiment of the present invention two or more partially loaded transducers 22, 24 would be mounted on the pipe at specific circumferential locations, depending on the sound field to be generated. Additional components would include gated tone burst power amplifiers 26, 28, sweep frequency generators 30, 32, timing and trigger networks 34, and a flaw detector 36 (Figure 5). As with the previous embodiment, the changes in transducer excitation frequency generate different geometric sound field patterns. Additionally, the use of trigger timing circuits further aid in "steering" the bounded sound field using constructive and destructive interference patterns in generated by the phase velocity differences ($\Delta f$) and time delays ($\Delta t$) in much the same way as phased array ultrasonic transducers.

Using this technique, the useable sound field can be "programmed" to virtually any axial and circumferential desired.

While the foregoing description and drawings represent the preferred embodiments of the present invention, it will be apparent to those skilled in the art that various changes and modifications may be made therein without departing from the true spirit and scope of the present invention.

## Claims

1. A weld inspection system for ultrasonically inspecting nuclear reactor coolant system piping in a nuclear reactor, comprising:

   a transducer for producing non-axisymmetric guided waves and formed to the contour of the nuclear reactor coolant system piping, a gated tone burst power amplifier; a sweep frequency generator; and an ultrasonic flaw detector.

2. The weld inspection system as in claim 1 wherein the transducer is a comb type transducer.

**3.** The weld inspection system as in claim 1 further including a wedge to provide a predetermined incident angle to generate guided waves in the nuclear reactor coolant system piping.

**4.** The weld inspection system as in claim 2 wherein the limits of the sweep frequencies are selected to maintain the sound field in the vessel piping.

**5.** A weld inspection system for ultrasonically inspecting nuclear reactor vessel safe and welds, comprising:

a transducer for producing non-axisymmetric guided waves and formed to the contour of the nuclear reactor vessel safe end welds,
a gated tone burst power amplifier;
a sweep frequency generator; and
an ultrasonic flaw detector.

**6.** The weld inspection system as in claim 5 wherein the transducer is a comb type transducer.

**7.** The weld inspection system as in claim 5 further including a wedge to provide a predetermined incident angle to generate guided waves in the nuclear reactor vessel safe ends.

**8.** The weld inspection system as in claim 6 wherein the limits of the sweep frequencies are selected to maintain the sound field in the nuclear reactor vessel safe ends.

**9.** A weld inspection system for ultrasonically inspecting nuclear reactor vessel jet pump risers, comprising:

a transducer for producing non-axisymmetric guided waves and formed to the contour of the nuclear reactor vessel jet pump risers;
a gated tone burst power amplifier,
a sweep frequency generator; and
an ultrasonic flaw detector.

**10.** The weld inspection system as in claim 9 wherein the transducer is a comb type transducer.

**11.** The weld inspection system as in claim 9 further including a wedge to provide a predetermined incident angle to generate guided waves in the vessel jet pump risers.

**12.** The weld inspection system as in claim 10 wherein the limits of the sweep frequencies are selected to maintain the sound field in the jet pump risers.

**13.** A weld inspection system for ultrasonically inspecting core spray piping in a nuclear reactor, comprising:

a transducer for producing non-axisymmetric guided waves and formed to the contour of the core spray piping;
a gated tone burst power amplifier;
a sweep frequency generator; and
an ultrasonic flaw detector.

**14.** The weld inspection system as in claim 13 wherein the transducer is a comb type transducer.

**15.** The weld inspection system as in claim 13 further including a wedge to provide a predetermined incident angle to generate guided waves in the core spray piping.

**16.** The weld inspection system as in claim 14 wherein the limits of the sweep frequencies are selected to maintain the sound field in the core spray piping.

**17.** A weld inspection system for ultrasonically inspecting nuclear reactor coolant system piping in a nuclear reactor, comprising:

a plurality of partially loaded transducers for producing non-axisymmetric guided waves and mounted on a reactor coolant system pipe at a predetermined location;
gated tone burst power amplifiers;
sweep frequency generators;
timing and trigger networks for bounding the sound field using constructive and destructive interference patters generated by a phase velocity difference and a time delay; and
a flaw detector.

**18.** A weld inspection system for ultrasonically inspecting coolant system piping external to a nuclear reactor, comprising:

a plurality of partially loaded transducers for producing non-axisymmetric guided waves and mounted on a coolant system pipe at a predetermined location,
gated tone burst power amplifiers;
sweep frequency generators;
timing and trigger networks for bounding the sound field using constructive and destructive interference patterns generated by a phase velocity difference and a time delay; and
a flaw detector.

**19.** A method for ultrasonic inspection of nuclear reactor piping welds, comprising the steps of:

transmitting ultrasonic guided waves into the piping;

detecting a reflected ultrasonic wave from the piping which reflected ultrasonic wave is indicative of a weld defect.

20. A method for ultrasonic inspection of nuclear reactor piping welds, comprising the steps of:

transmitting ultrasonic guided waves into the piping;
detecting a reflected ultrasonic wave from the piping which reflected ultrasonic wave is indicative of a variation from a predetermined wall thickness.

# FIG. 1

# FIG. 2A

PHASE VELOCITY (MIN/MICROESEC.)

f-d PRODUCT (MHz mm)

# FIG. 2B

PHASE VELOCITY (MIN/MICROESEC.)

s/d = SLOPE = m

f-d PRODUCT (MHz mm)

# FIG. 3

SPATIAL PERIOD, s

WAVELENGTH, λ

# FIG. 4

BIOSHIELD OR ANY
PHYSICAL BARRIER

FLAW
DETECTOR — 18

SWEEP FREQUENCY
GENERATOR — 16

GATE TIMING
SIGNAL

$F_1$ TO $F_2$

14

GATED POWER
AMPLIFIER

GATED TONE BURST SIGNAL
$F_1$ TO $F_2$

WELD

PARTIALLY LOADED
TRANSDUCER (COMB)
12

SOUND FIELD TRAVELING
WITHIN PIPE WALL

# FIG. 5

VARIABLE DISTANCE FOR
PROPER SOUND FIELD

22

24

FLAW
DETECTOR    36

TIMING AND
TRIGGER    34

POWER
AMPLIFIER    26

PROGRAMMABLE
FREQ. GENERATOR    30

POWER
AMPLIFIER    28

PROGRAMMABLE
FREQ. GENERATOR    32